# EUROPEAN PATENT SPECIFICATION

(11) **EP 2 048 375 B1**
(45) Date of publication and mention of the grant of the patent: **08.06.2011**
(21) Application number: 08161367.1
(22) Date of filing: 29.07.2008
(51) Int. Cl.: F16B 2/06, F16B 39/10

(54) **Supporting bracket and nut holder**
Stützklammer und Mutternhalter
Accessoire de support et support d'écrou

(30) Priority: 05.10.2007 JP 2007261878; 19.05.2008 JP 2008131126
(43) Date of publication of application: 15.04.2009
(73) Proprietor: Buresuto Kogyo Co., Ltd., Tokyo (JP)
(72) Inventor: Sugaya, Keiichi, Tokyo (JP); Kato, Junichi, Tokyo (JP)
(74) Representative: Huebner, Stefan Rolf

(56) References cited:
- JP-A- 8 074 375
- JP-U- 1 129 409
- JP-U- 1 173 220
- JP-U- 61 146 613
- US-A- 4 570 885
- US-A- 6 027 293

## Description

### BACKGROUND OF THE INVENTION

### 1. Field of the Invention

The present invention relates to a supporting bracket which is fixed to another object using a fastening bolt, and which supporting bracket is adapted to support a member, such as a hang bolt, a chain, a pipe, a cable or a lighting equipment, with respect to a mounting hole thereof. The present invention also relates to a nut holder for use with the supporting bracket.

### 2. Description of the Background Art

Heretofore, it has been known to fix a C-shaped supporting bracket to a horizontal member such as an angle steel, and to support various members such as a cable tube, a cable and a lighting equipment, with respect to a circular mounting hole formed in a lower wall of the supporting bracket, through the use of various types of mounting adapters. To support an upper end of a hang bolt with respect to the mounting hole has also been known.

When the upper end of the hang bolt is supported with respect to the mounting hole, a T-shaped nut having a cylindrical threaded hole portion is inserted into the upper end of the mounting hole of the supporting bracket in combination with an anti-corotation washer, and the hang bolt is screwed into the T-shaped nut from the lower end side of the mounting hole so that the hang bolt is mounted and supported thereto.

However, in the conventional supporting bracket for supporting a hang bolt, it is necessary to separately purchase expensive components, i.e., the T-shaped nut and anti-corotation washer (it is also necessary to prepare T-shaped nuts having different diameters in conformity with hang bolts). Moreover, it causes an increase in the number of components, which results in the need for a cumbersome and time-consuming installation process.

For these reasons, a supporting bracket is fabricated with a tubular-shaped mounting hole with a threaded inner peripheral surface. However, the supporting bracket formed in this manner has a problem of being unable to be used for various types of hang bolts with different diameters. Moreover, if the tubular-shaped mounting hole is utilized, it is not possible to use the aforementioned mounting adapters for mounting the various members such as a cable tube, a cable and a lighting equipment, which results in not being able to support such members.

### SUMARY OF THE INVENTION

In view of the above problems, it is an object of the present invention to provide a supporting bracket capable of supporting various types of hang bolts with different dieamters without hindering mounting of various other members, such as a calbe tube, a cable and a lighting equipment. It is another object of the present invention to provide a nut holder suitable for use with the supporting bracket.

In order to achieve the above objects, as set forth in the appended claims 1 to 3, the present invention provides a supporting bracket comprising a connecting portion, a first plate portion which is integrally provided to one end of the connecting portion, and a second plate portion which is integrally provided to the other end of the connecting portion to extend substantially parallel to the first plate portion, the first plate portion haven a threaded hole formed therein, and the second plate portion having a mounting hole formed therein, and side plate portions integrally erected from widthwise opposite sides of the second plate portion toward the first plate portion, wherein the supporting bracket is adapted to clamp a separate object between a distal end of a fastening bolt screwed in the threaded hole of the first plate portion and the side plate portions so as to fix the separate object, and to support an upper end of a hang bolt with respect to the mounting hole of the second plate portion, and wherein the mounting hole is formed in a shape which allows insertion of a polygonal shape head portion of a flanged nut into the mounting hole in a direction of a thickness of the second plate portion and in a non-rotatable manner.

In the supporting bracket of the present invention as set forth in the appended claims 1 to 3, when the head portion of the flanged nut is inserted into the mounting hole, an the hang bolt is screwed into the head portion from the lower end side of the head portion, the head portion is inserted into the mounting hole in a non-rotatable manner. This makes it possible to eliminate a need for expensive components such as a T-shaped nut and an anti-corotation washer, and use of a plurality of flanged nuts with different diameters so as to conform with various types of hang bolts with different diameters.

In addition, the mounting hole is formed in the second plate portion, i.e., a flat plate. Thus, there would not be any difficulty in using a mounting adapter.

### BRIEF DESCRIPTION OF THE DRAWINGS

FIG. 1 is a perspective view showing a supporting bracket according to one embodiment of the present invention
FIG. 2 is a side view showing the supporting bracket according to the embodiment.
FIG. 3 is a sectional view showing the supporting bracket according to the embodiment in its in-use state.
FIG. 4 is a perspective view showing a flanged hexagonal nut.
FIG. 5 is a sectional view showing the supporting bracket according to the embodiment in its in-use state.
FIG. 6 is a top plan view showing a mounting hole in the supporting bracket according to the embodiment.
FIG. 7 is a top plan view showing another example of the mounting hole in the supporting bracket according to the embodiment.
FIG. 8 is a top plan view showing yet another example of the mounting hole in the supporting bracket according to the embodiment.
FIG. 9 is a top plan view showing still another example of the mounting hole in the supporting bracket according to the embodiment.
FIG. 10 is a top plan view showing a relationship between a flanged nut, and a mounting hole in the supporting bracket according to the embodiment.
FIG. 11 is a sectional view showing a relationship between a mounting adapter, and a mounting hole in the supporting bracket according to the embodiment.
FIG. 12 is a perspective view showing a nut holder according to one embodiment of the present invention.
FIG. 13 is a bottom view showing another example of the flanged nut.
FIG. 14 is a side view showing the flanged nut in FIG. 13.
FIG. 15 is a top plan view showing yet still another example of the mounting hole in the supporting bracket according to the embodiment.
FIG. 16 is a top plan view showing another further example of the mounting hole in the supporting bracket according to the embodiment.
FIG. 17 is a perspective view showing yet another example of the flanged nut.
FIG. 18 is a top plan view showing another further example of the mounting hole in the supporting bracket according to the embodiment.

### DESCRIPTION OF THE PREFERRED EMBODIMENTS

With reference to the drawings, the present invention will now be described based on an embodiment thereof.

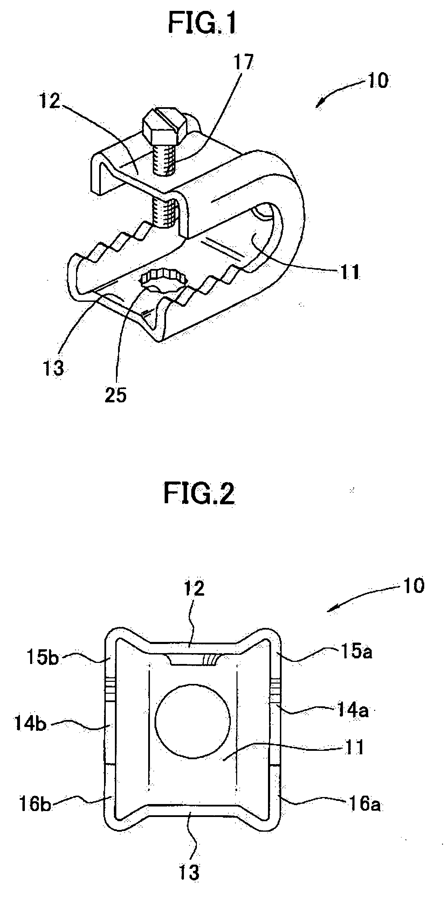

FIG. 1 shows a supporting bracket 10 according to one embodiment of the present invention.

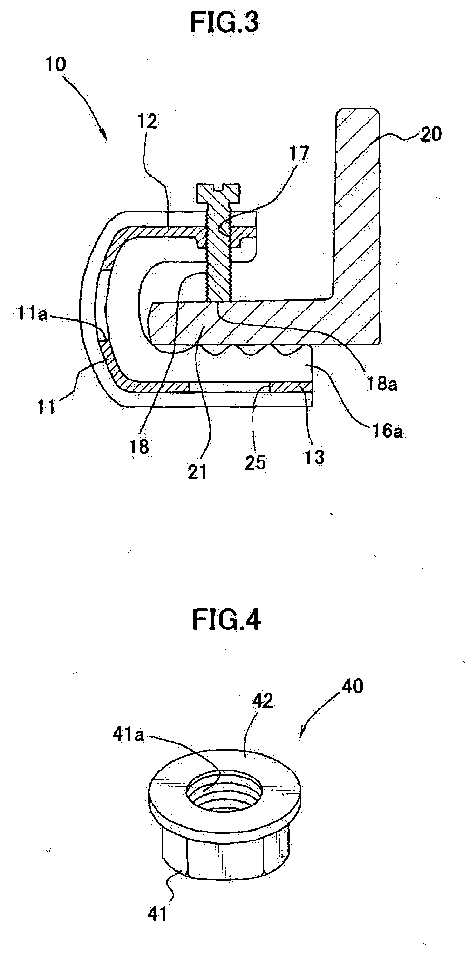

As shown in FIG. 1, the supporting bracket 10 comprises an arc-shaped connecting portion 11, a first plate portion 12 integrally provided to one end of the connecting portion 11, and a second plate portion 13 integrally provided to the other end of the connecting portion 11 so as to extend substantially parallel to the first plate portion 12. The supporting bracket 10 is made of a metal plate, and is of a generally C-shaped. In FIG. 3, the reference numeral 11 a indicates a mounting hole formed in the connecting portion 11.

As shown in FIG. 2, the supporting bracket 10 further comprises a pair of side plates 14a, 14b integrally erected from respective widthwise opposite lateral edges of the connecting portion 11 in a direction substantially perpendicular to the connecting portion 11, a pair of side plates 15a, 15b integrally erected from respective widthwise opposite lateral edges of the first plate portion 12 in a direction substantially perpendicular to the first plate portion 12, and a pair of side plates 16a, 16b integrally erected from respective widthwise opposite lateral edges of the second plate portion 15 in a direction substantially perpendicular to the second plate portion 15, wherein the side plates 15a, 14a, 16a are formed to extend integrally and continuously, and the side plates 15b, 14b, 16b are formed to extend integrally and continuously.

As shown in FIG. 3, the first plate portion 12 is formed with a threaded hole 17, and a fastening bolt 18 is screwed into the threaded hole 17.

Thus, as shown in FIG. 3, when a horizontal portion 21 of, for example, an angle steel 20, is inserted between the first plate portion 12 and the second plate portion 13, and then the fastening bolt 18 is tightened, the horizontal portion 21 is clamped between a distal end 18a of the fastening bolt 18 and an upper end of the side plates 16a, 16b, so that the supporting bracket 10 is fixed to the horizontal portion 21.

The second plate portion 13 is formed with a mounting hole 25.

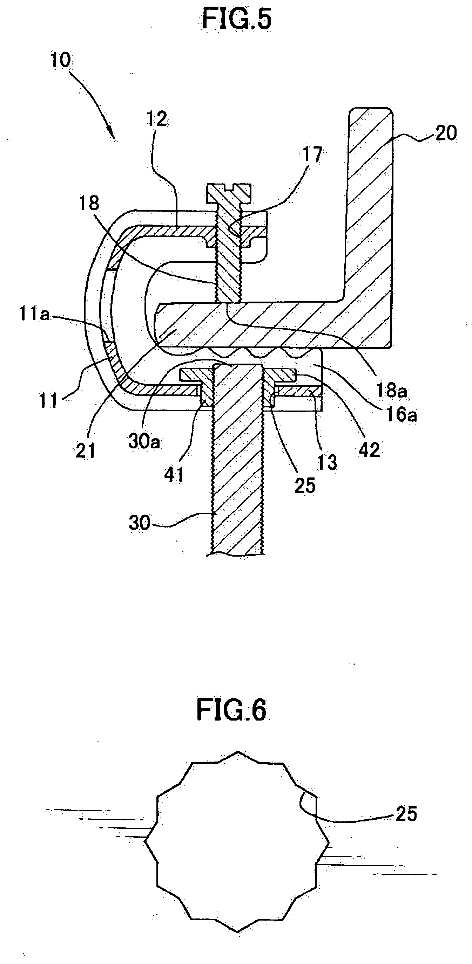

The mounting hole 25 is formed in a configuration which allows a polygonal (e.g., hexagonal) head portion 41 of a flanged polygonal (e.g., hexagonal) nut, into which a hang bolt 30 (an member) is screwed, to be inserted into the mounting hole 25 in a direction of the thickness of the second plate portion 13 (as shown in FIG. 5) in a non-rotatable manner. In this embodiment, the configuration is similar to a circle having a plurality of protrusions projecting toward the center thereof. While FIG. 4 shows a flanged hexagonal nut as one example, a flanged quadrangular or pentagonal nut may also be employed.

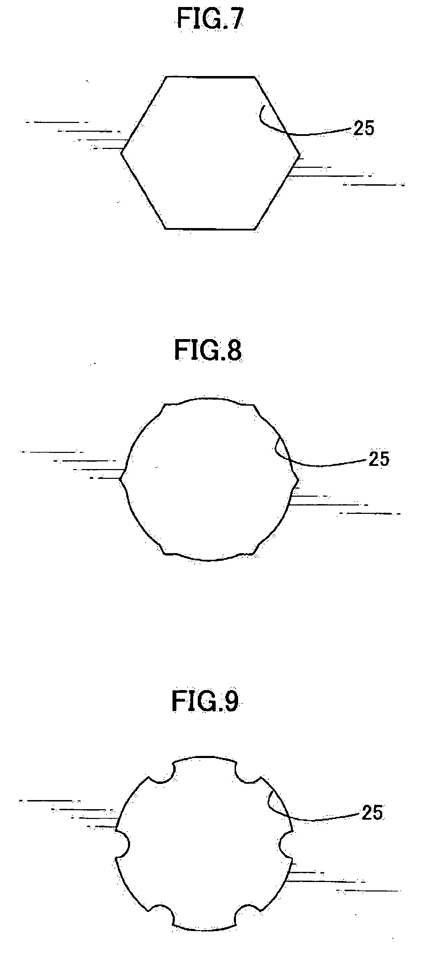

As shown in FIG. 6, the mounting hole 25 may be formed, for example, in a star shape having a plurality of depressions and a plurality of protrusions created by displacing two polygons (e.g., in FIG. 6, hexagons) with respect to each other in a circumferential direction thereof. Alternatively, the mounting hole 25 may be formed in a polygonal shape, as shown in FIG. 7, or may be formed in a shape created by superimposing a polygonal shape on a round shape as shown in FIG. 8, or may be formed in a shape created by projecting a plurality of protrusions inwardly from a circle, as shown in FIG. 9.

A flanged nut 40 comprises a tubular-shaped head portion (e.g., a hexagonal columnar head portion) 41 having a threaded inner peripheral surface 41 a, and a flange portion 42. Thus, when the head portion 41 is inserted into the mounting hole 25 from the upper side of the second plate portion 13 as shown in FIG. 5, the flange portion 42 is brought into contact with an outer peripheral edge of the mounting hole 25 to prevent the flanged nut 40 from falling out of the mounting hole 25.

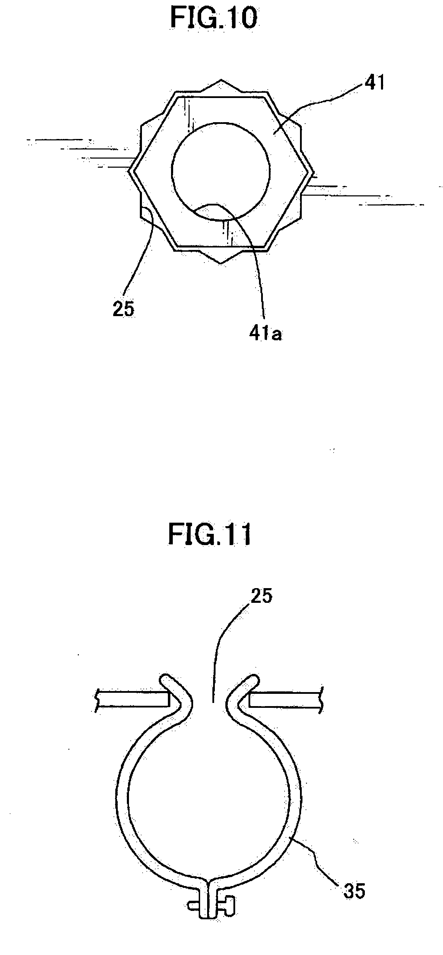

In this above state, an operator screws an upper end 30a of the hang bolt 30 into the threaded inner peripheral surface 41 a of the head portion 41 from the lower side of the second plate portion 13, and continuously rotates the hang bolt 30 below the second plate portion 13. During this operation, as shown in FIG. 10, due to the configuration of the mounting hole 25, the head portion 41 does not rotate whereby the head portion 41 is prevented from being co-rotated with the hang bolt 30. Thus, the hang bolt 30 can be screwed until the upper end 30a protrudes upwardly from the flange portion 42.

This makes it possible to use a plurality of commercially-available low-cost flanged nuts with different diameters in conformity to a change in diameter of the hang bolt 30, without the need for separately purchasing costly components, such as an anti-corotation washer and a T-shaped nut.

The mounting hole 25 is formed in a flat configuration similar to a circle although it has a plurality of protrusions protruding inwardly, as mentioned above. Thus, various types of mounting adapters for mounting thereto various other members, such as a cable tube, a cable and a lighting equipment, can be used in the same manner as that in a circular mounting hole without hindering mounting of such members. FIG. 11 shows a mounting adapter 35 for holding a cable tube, in a state after being mounted to the mounting hole 25.

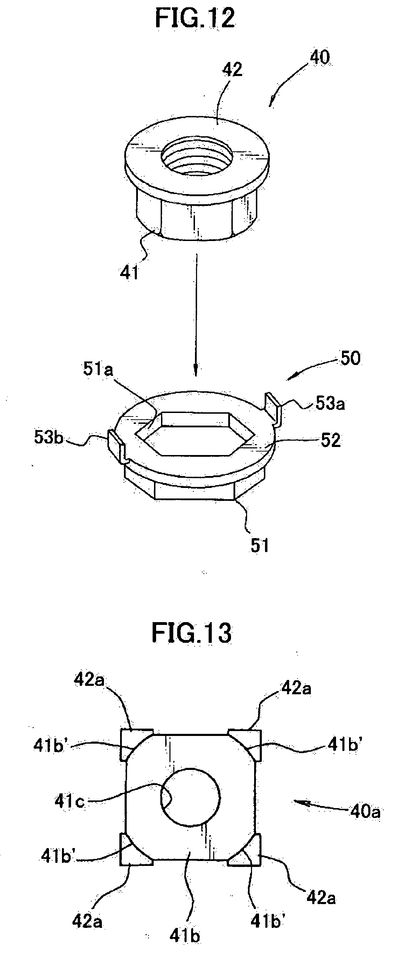

FIG. 12 shows a nut holder 50 according to one embodiment of the present invention. The nut holder 50 comprises a column portion 51 having a through-hole 51 a adapted to receive therein the head portion 41 of the flanged nut 40 in a non-rotatable manner, and a flange portion 52 protruding outwardly from an outer peripheral edge of one end of the column portion 51. The flange portion 52 has two finger pieces 53a, 53b each formed to protrude upwardly. In the operation of mounting the hang bolt 30 after tightening the fastening bolt 18 of the supporting bracket 10 to clamp the separate object 20, the finger pieces 53a, 53b protruding upwardly can prevent uplift of the nut holder 50.

The column portion 51 of the nut holder 50 is formed to be inserted into the mounting hole 25 of the supporting bracket 10 in a non-rotatable manner, and the head portion 41 of the flanged nut 40 is received in the through-hole 51 a of the nut holder 50 in a non-rotatable manner.

Thus, the nut holder 50 makes it possible to use even a small-diameter flanged nut 40 incompatible with the mounting hole 25 of the supporting bracket 10 (i.e., which is undesirably rotated with respect to the mounting hole 25).

In the above embodiment, each of the flanged nut, the nut holder and the through-hole are formed in a hexagonal shape. Alternatively, each of the flanged nut, the nut holder and the through-hole may be formed in any other suitable polygonal shape, such as a quadrangular or pentagonal shape.

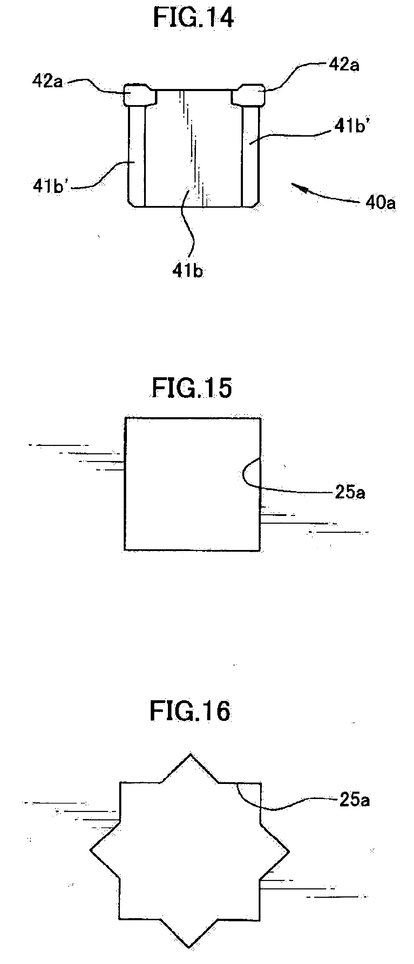

FIGS. 13 and 14 show a quadrangular columnar-shaped flanged nut 40. Specifically, in FIG. 14, the reference numeral 41 b indicates a quadrangular columnar-shaped head portion having four corners each formed as an arc-shaped peripheral surface 41 b', and four flange portions 42a are provided on the four corners, respectively. That is, the flange portion of the flanged nut in the present invention is not limited to a structure designed to continuously protrude outwardly from the entire outer peripheral edge of one end of the flanged nut, but may have a structure designed to protrude outwardly from only a part of the outer peripheral edge of one end of the flanged nut, as in the above example.

FIG. 15 shows a quadrangular-shaped mounting hole 25a, and FIG. 16 shows a mounting hole 25a having a shape created by displacing two quadrangles with respect to each other in a circumferential direction thereof. Each of the mounting holes 25a, 25a in FIGS. 15 and 16, respectively, is adapted to receive therein the quadrangular columnar-shaped head portion 41 b in FIGS. 13 and 14 in a non-rotatable manner.

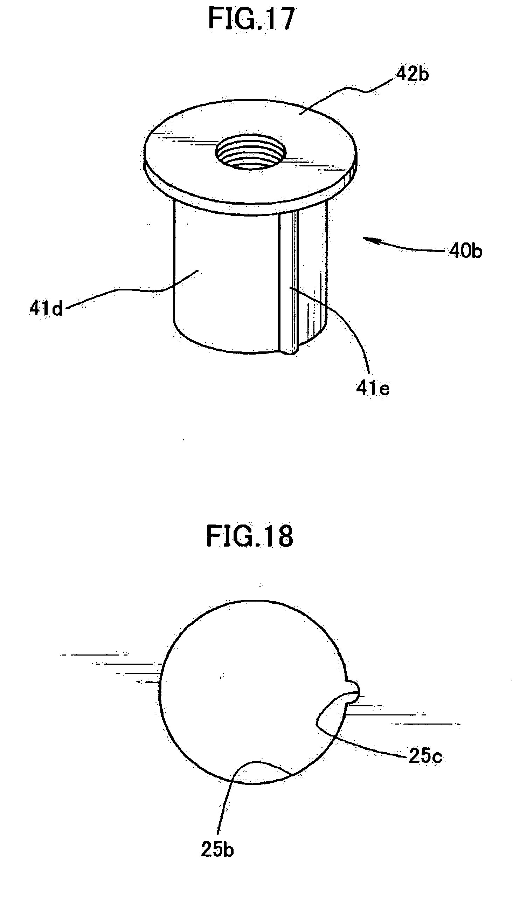

FIG. 17 shows a flanged nut 40b having a columnar-shaped head portion 41d. The head portion 41 has an elongate boss 41 e formed on an outer peripheral surface thereof to extend in an axial direction of the flanged nut 40b.

FIG. 18 shows a mounting hole 25b adapted to receive therein the head portion 41 d of the flanged nut 40b in FIG. 17. The mounting hole 25b has a circular shape, a part of which is formed as a groove 25c adapted to receive therein the elongate boss 41 e.

The flange portion 42 of the flanged nut 40 may be integrally formed with the head portion 41 to protrude from the head portion 41. Alternatively, the flange portion 40 may be formed separately from the head portion 41, and then fixed to the head portion 41 by crimping or caulking. The flange portion 52 of the nut holder 50 may be formed in the same manner.

## Claims

1. A supporting bracke (10) comprising:
a connecting portion (11), a first plate portion (12) which is integrally provided to one end of said connecting portion, and a second plate portion (13) which is integrally provided to the other end of said connecting portion to extend substantially parallel to said first plate portion, the first plate portion having a threaded hole (17) formed therein and the second plate portion having a mounting hole (25) formed therein, and side plate portions (16a, 16b) integrally erected from widthwise opposite sides of said second plate portion toward said first plate portion, and
wherein said supporting bracket is adapted to clamp a separate object (20) between a distal end (18a) of a fastening bolt (18) screwed in said threaded hole of said first plate portion and said side plate portion so as to fix said separate object, and support an upper end of a hang bolt (30) with respect to said mounting hole of said second plate portion, **characterized in that** said mounting hole (25) is formed in a shape which allows insertion of a polygonal shape head portion (41) of a flanged nut (40) into said mounting hole in a direction of a thickness of said second plate portion in a non-rotatable manner, said shape of said mounting hole being that created by coaxially displacing the polygonal shape with respect to each other in a circumferential direction thereof.

2. A supporting bracket (10) comprising:
a connecting portion (11), a first plate portion (12) which is integrally provided to one end of said connecting portion, and a second plate portion (13) which is integrally provided to the other end of said connecting portion to extend substantially parallel to said first plate portion, the first plate portion having a threaded hole (12) formed therein and the second plate portion having a mounting hole (25) formed therein, and side plate portions (16a, 16b) integrally erected from widthwise opposite sides of said second plate portion toward said first plate portion, and
wherein said supporting bracket is adapted to clamp a separate object (20) between a distal end/of a fastening blot screwed in said threaded hole of said first plate portion and said side plate portion so as to fix said separate object, and support an upper end of a hang bolt (30) with respect to said mounting hole of said second plate portion,
**characterized in that** said mounting hole (25) is formed in a shape which allows insertion of a polygonal shape head portion (41) of a flanged nut (40) into said mounting hole in a direction of a thickness of said second plate portion in a non-rotatable manner, said shape of said mounting hole being that created by superimposing a polygonal shape on a circle while apexes of the polygonal shape protrude outside of the circle.

3. A supporting bracket (10) comprising:
a connecting portion (11), a first plate portion (12) which is integrally provided to one end of said connecting portion, and a second plate portion (13) which is integrally provided to the other end of said connecting portion to extend substantially parallel to said first plate portion, the first plate portion having a threaded hole (17) formed therein and the second plate portion having a mounting hole (25) formed therein, and side plate portions (16a, 16b) integrally erected from widthwise opposite sides of said second plate portion toward said first plate portion, and
wherein said supporting bracket is adapted to clamp a separate object (20) between a distal end (18a) of a fastening bolt (18) screwed in said threaded hole of said first plate portion and said side plate portions so as to be fixed to said separte object, and support an upper end of a hang bolt (30) with respect to said mounting hole of said second plate portion,
**characterized in that** said mounting hole (25) is formed in a shape which allows insertion of a polygonal shape head portion (41) of a flanged nut (40) into said mounting hole in a direction of a thickness of said second plate portion in a non-rotatable manner, said shape of said mounting hole being that created by projecting a plurality of protrusions inwardly from a circle which allows the head to go through.

## Patentansprüche

1. Haltebügel (10), der umfasst:
einen Verbindungsabschnitt (11), einen ersten Plattenabschnitt (12), der an ein Ende des Verbindungsabschnitts angeformt ist, einen zweiten Plattenabschnitt (13), der an das andere Ende des Verbindungsabschnitts angeformt ist und sich im Wesentlichen parallel zu dem ersten Plattenabschnitt erstreckt, wobei der erste Plattenabschnitt ein darin ausgebildetes Gewindeloch (17) aufweist und der zweite Plattenabschnitt ein darin ausgebildetes Befestigungsloch (25) aufweist, und seitliche Plattenabschnitte (16a, 16b), die in Breitenrichtung an gegenüberliegenden Seiten des zweiten Plattenabschnitts angeformt zum ersten Plattenabschnitt hinauf ragen, und
wobei der Haltebügel so ausgerichtet ist, dass er einen separaten Gegenstand (20) zwischen einem distalen Ende (18a) eines Befestigungsbolzens (18), der in die Gewindebohrung des ersten Plattenabschnitts eingeschraubt ist, und den seitlichen Plattenabschnitten so einklemmen kann, dass er diesen separaten Gegenstand fixieren und ein oberes Ende eines Hängebolzens (30) bezüglich des Befestigungslochs des zweiten Plattenabschnitts stützen kann, **dadurch gekennzeichnet, dass** das Befestigungsloch (25) eine Form aufweist, die das Einführen eines polygonoal geformten Kopfabschnitts (41) einer Flanschmutter (40) in das Befestigungsloch in Richtung einer Dicke des zweiten Plattenabschnitts in nicht rotierbarer Weise erlaubt, wobei das Befestigungsloch eine Form hat, die durch koaxiale Verlagerung der Polygonform zu sich selbst in Umfangsrichtung gebildet wird.

2. Haltebügel (10), der umfasst:
einen Verbindungsabschnitt (11), einen ersten Plattenabschnitt (12), der an ein Ende des Verbindungsabschnitts angeformt ist, einen zweiten Plattenabschnitt (13), der an das andere Ende des Verbindungsabschnitts angeformt ist und sich im Wesentlichen parallel zu dem ersten Plattenabschnitt erstreckt, wobei der erste Plattenabschnitt ein darin ausgebildetes Gewindeloch (17) aufweist und der zweite Plattenabschnitt ein darin ausgebildetes Befestigungsloch (25) aufweist, und seitliche Plattenabschnitte (16a, 16b), die in Breitenrichtung an gegenüberliegenden Seiten des zweiten Plattenabschnitts angeformt zum ersten Plattenabschnitt hinauf ragen, und
wobei der Haltebügel so ausgerichtet ist, dass er einen separaten Gegenstand (20) zwischen einem distalen Ende (18a) eines Befestigungsbolzens (18), der in die Gewindebohrung des ersten Plattenabschnitts eingeschraubt ist, und den seitlichen Plattenabschnitten so einklemmen kann, dass er diesen separaten Gegenstand fixieren und ein oberes Ende eines Hängebolzens (30) bezüglich des Befestigungslochs des zweiten Plattenabschnitts stützen kann, **dadurch gekennzeichnet, dass** das Befestigungsloch (25) eine Form aufweist, die das Einführen eines polygonoal geformten Kopfabschnitts (41) einer Flanschmutter (40) in das Befestigungsloch in Richtung einer Dicke des zweiten Plattenabschnitts in nicht rotierbarer Weise erlaubt, wobei das Befestigungsloch eine Form hat, die durch Überlagerung einer Polygonform und eines Kreises in der Weise, das Vorsprünge der Polygonform über den Kreis hinausragen, gebildet wird.

3. Haltebügel (10), der umfasst:
einen Verbindungsabschnitt (11), einen ersten Plattenabschnitt (12), der an ein Ende des Verbindungsabschnitts angeformt ist, einen zweiten Plattenabschnitt (13), der an das andere Ende des Verbindungsabschnitts angeformt ist und sich im Wesentlichen parallel zu dem ersten Plattenabschnitt erstreckt, wobei der erste Plattenabschnitt ein darin ausgebildetes Gewindeloch (17) aufweist und der zweite Plattenabschnitt ein darin ausgebildetes Befestigungsloch (25) aufweist, und seitliche Plattenabschnitte (16a, 16b), die in Breitenrichtung an gegenüberliegenden Seiten des zweiten Plattenabschnitts angeformt zum ersten Plattenabschnitt hinauf ragen, und
wobei der Haltebügel so ausgerichtet ist, dass er einen separaten Gegenstand (20) zwischen einem distalen Ende (18a) eines Befestigungsbolzens (18), der in die Gewindebohrung des ersten Plattenabschnitts eingeschraubt ist, und den seitlichen Plattenabschnitten so einklemmen kann, dass er diesen separaten Gegenstand fixieren und ein oberes Ende eines Hängebolzens (30) bezüglich des Befestigungslochs des zweiten Plattenabschnitts stützen kann, **dadurch gekennzeichnet, dass** das Befestigungsloch (25) eine Form aufweist, die das Einführen eines polygonoal geformten Kopfabschnitts (41) einer Flanschmutter (40) in das Befestigungsloch in Richtung einer Dicke des zweiten Plattenabschnitts in nicht rotierbarer Weise erlaubt, wobei das Befestigungsloch eine Form hat, die dadurch gebildet wird, dass eine Vielzahl von Vorsprüngen von einem Kreis, der den Durchgang des Kopfes erlaubt, nach innen ragen.

## Revendications

1. Accessoire de support (10), comprenant :
une partie de liaison (11), une première partie formant plaque (12) formée d'un seul tenant avec une première extrémité de ladite partie de liaison, et une seconde partie formant plaque (13) formée d'un seul tenant avec l'autre extrémité de ladite partie de liaison pour s'étendre sensiblement parallèlement à ladite première partie formant plaque, la première partie formant plaque ayant un trou fileté (17) formé dans celle-ci et la seconde partie formant plaque ayant un trou de montage (25) formé dans celle-ci, et des parties formant plaques latérales (16a, 16b) se dressant solidairement vers ladite première partie formant plaque depuis des côtés opposés, dans le sens de la largeur, de ladite seconde partie formant plaque, et
ledit accessoire de support étant conçu pour serrer un objet séparé (20) entre une extrémité distale (18a) d'un boulon de fixation (18) vissé dans ledit trou fileté de ladite première partie formant plaque et ladite partie formant plaque latérale de façon à fixer ledit objet séparé, et à supporter une extrémité supérieure d'une cheville de suspension (30) par rapport audit trou de montage de ladite seconde partie formant plaque, **caractérisé en ce que** ledit trou de montage (25) est doté d'une forme qui permet d'introduire dans ledit trou de montage, dans un sens d'épaisseur de ladite seconde partie formant plaque, une partie, de forme polygonale, formant tête (41) d'un écrou (40) à embase de manière à l'empêcher de tourner, ladite forme dudit trou de montage étant celle créée en décalant les formes polygonales l'une par rapport à l'autre dans une direction circonférentielle de celui-ci.

2. Accessoire de support (10), comprenant :
une partie de liaison (11), une première partie formant plaque (12) formée d'un seul tenant avec une première extrémité de ladite partie de liaison, et une seconde partie formant plaque (13) formée d'un seul tenant avec l'autre extrémité de ladite partie de liaison pour s'étendre sensiblement parallèlement à ladite première partie formant plaque, la première partie formant plaque ayant un trou fileté (17) formé dans celle-ci et la seconde partie formant plaque ayant un trou de montage (25) formé dans celle-ci, et des parties formant plaques latérales (16a, 16b) se dressant solidairement vers ladite première partie formant plaque depuis des côtés opposés, dans le sens de la largeur, de ladite seconde partie formant plaque, et
ledit accessoire de support étant conçu pour serrer un objet séparé (20) entre une extrémité distale (18a) d'un boulon de fixation (18) vissé dans ledit trou fileté de ladite première partie formant plaque et lesdites parties formant plaques latérales de façon à fixer ledit objet séparé, et à supporter une extrémité supérieure d'une cheville de suspension (30) par rapport audit trou de montage de ladite seconde partie formant plaque,
**caractérisé en ce que** ledit trou de montage (25) est doté d'une forme qui permet d'introduire dans ledit trou de montage, dans un sens d'épaisseur de ladite seconde partie formant plaque, une partie, de forme polygonale, formant tête (41) d'un écrou (40) à embase de manière à l'empêcher de tourner, ladite forme dudit trou de montage étant celle créée en superposant une forme polygonale à un cercle, les angles de la forme polygonale dépassant à l'extérieur du cercle.

3. Accessoire de support (10), comprenant :
une partie de liaison (11), une première partie formant plaque (12) formée d'un seul tenant avec une première extrémité de ladite partie de liaison, et une seconde partie formant plaque (13) formée d'un seul tenant avec l'autre extrémité de ladite partie de liaison pour s'étendre sensiblement parallèlement à ladite première partie formant plaque, la première partie formant plaque ayant un trou fileté (17) formé dans celle-ci et la seconde partie formant plaque ayant un trou de montage (25) formé dans celle-ci, et des parties formant plaques latérales (16a, 16b) se dressant solidairement vers ladite première partie formant plaque depuis des côtés opposés, dans le sens de la largeur, de ladite seconde partie formant plaque, et
ledit accessoire de support étant conçu pour serrer un objet séparé (20) entre une extrémité distale (18a) d'un boulon de fixation (18) vissé dans ledit trou fileté de ladite première partie formant plaque et ladite partie formant plaque latérale de façon à être fixé audit objet séparé, et à supporter une extrémité supérieure d'une cheville de suspension (30) par rapport audit trou de montage de ladite seconde partie formant plaque,
**caractérisé en ce que** ledit trou de montage (25) est doté d'une forme qui permet d'introduire dans ledit trou de montage, dans un sens d'épaisseur de ladite seconde partie formant plaque, 1 une partie, de forme polygonale, formant tête (41) d'un écrou (40) à embase de manière à l'empêcher de tourner, ladite forme dudit trou de montage étant celle créée en amenant une pluralité de saillies à dépasser vers l'intérieur depuis un cercle, ce qui permet à la tête de passer à travers.
